# EUROPÄISCHE PATENTSCHRIFT

(11) **EP 1 092 343 B1**
(45) Veröffentlichungstag und Bekanntmachung des Hinweises auf die Patenterteilung: **07.07.2004**
(21) Anmeldenummer: 00118951.3
(22) Anmeldetag: 01.09.2000
(51) Int. Cl.: A01G 9/02, B29C 51/34, B29C 51/30

(54) **Pflanztopf aus tiefgezogener Kunststoffolie**
Plant pot moulded from a plastic sheet
Pot de fleur formé par emboutissage d'une feuille de matière plastique

(30) Priorität: 12.10.1999 DE 29918043 U
(43) Veröffentlichungstag der Anmeldung: 18.04.2001
(73) Patentinhaber: Pöppelmann Holding GmbH & Co. KG., 49393 Lohne (DE)
(72) Erfinder: Sieverding, Alfons, 49393 Lohne-Brockdorf (DE)
(74) Vertreter: Busse & Busse Patentanwälte

(56) Entgegenhaltungen:
- EP-A- 0 724 826
- EP-A- 0 974 263

## Beschreibung

Pflanztöpfe werden großenteils aus Kunststoff gefertigt. Insbesondere der Erwerbsgartenbau verwendet Kunststoff-Pflanztöpfe wegen der Festigkeit, Zuverlässigkeit, Stapelbarkeit, Handhabbarkeit und des geringen Gewichts. Dabei bestehen nebeneinander spritzgußgeformte und tiefgezogene Produkte, wobei das Spritzgußformen freiere Gestaltungsmöglichkeiten eröffnet als das Tiefziehen, bei dem der Formvorgang aus einer flachen Kunststoffolie eine Abhängigkeit der zu erzielenden Wandstärke von der Verformung bedingt und bei der die Formgebung Verzweigungen, Verstrebungen, Fortsätze u.dgl. verbietet. Während spritzgußgeformte Töpfe einen flachen oder bereichsweise zu Entwässerungslöchern hin abgesenkten Boden erhalten, der insgesamt über stegartige Füße gegenüber einer Aufstellebene hochgelegt ist und damit unter dem Topf zur Vermeidung von Staunässe einen freien Durchgangsraum für ablaufendes oder vorbeilaufendes Wasser bietet, sind bisher tiefgezogene Pflanztöpfe (siehe EP-A-0 724 826) unzulänglich durch Füße in Napfform aufzustellen gewesen. Solche napfförmigen Füße bilden aber unter dem Topf gegenüber der Aufstellfläche Bereiche für kapillar anhaftendes Wasser wie auch im Topf Nester für Staunässe. Ablauflöcher im Bereich dieser napfförmigen Füße sind nicht in der Lage, ein vollständiges Ablaufen des Wasser aus dem Topf zu sichern und eine unerwünschte Wasseraufnahme von unten auszuschließen.

Gemäß der Erfindung wird mit einem Pflanztopf aus tiefgezogener Kunststoffolie gemäß dem Anspruch 1 Abhilfe geschaffen. Mit einer solchen Ausführungsform des Pflanztopfs ist es gelungen, bei der tiefgezogenen Form mit ihren besonderen Vorteilen in bezug auf Dünnwandigkeit, Festigkeit und Preiswürdigkeit einen durchgehend gegenüber der Aufstellebene hochgelegten Boden zu erzielen und flächige Anlagebereiche der Füße gegenüber der Aufstellebene zu vermeiden. Der doppellagig ausgebildete Rand ergibt eine Steifigkeit, die den in der Praxis anzunehmenden Belastungen der Füße ohne Einknicken und Abbiegen gerecht wird. Diese Randabschnitte liegen im Sinne eines großen Aufstellradius und damit einer guten Standfestigkeit außen.

Ein solcher doppellagiger Rand läßt sich systemgerecht mit dem Tiefziehen durch Ausbildung einer Topfform und nachfolgendes Rückstülpen eines Bodenbereiches erzielen. Dies führt aber zunächst einmal zu einer rotationssymmetrischen Form mit einem durchgängig umlaufenden, doppellagig ausgebildeten Rand und einer in einer Ebene durchgängigen kreisförmigen Aufstellinie. Damit würden sich leicht unterhalb eines Topfbodens zur Aufstellfläche hin mehr oder weniger geschlossene Kammern mit der Gefahr von Staunässe und der Entwicklung unerwünschter Kulturen ergeben. Zur seitlichen Öffnung des Zwischenraums zwischen Topfboden und Aufstellfläche sind Lücken (Durchlässe) zwischen den Füßen vorzusehen, die gleichfalls bei der Formgebung des Topfes erreicht werden können. Die Formgebung könnte zwar ein bereichsweises Anstauchen des Randes oder ein Ausbiegen des Randes im Bereich der Lücken vorsehen, desgl. könnte die Zwischenform des Topfes unterschiedliche Höhen erhalten. Als besonders vorteilhaft hat sich aber herausgestellt, den Boden oberhalb einer Lücke randseitig hochzuziehen. Damit werden auch die Lücken im Fußbereich durch systemgerechte Formgebungsmaßnahmen erzielt. Die Folie wird ohne ein Anstauchen oder Ausbiegen im Bereich der Lücken stärker noch oben hochgezogen als in dem Bereich, in dem die Randabschnitte als Füße auf der Aufstellebene stehen.

Im Ergebnis läßt sich mit Mitteln des Tiefziehens ein Pflanztopf erstellen, der eigentlich für diese Herstellungsart ungewöhnliche und für den praktischen Gebrauch sehr wichtige Gestaltungsmerkmale aufweist. Der Aufstellrand ist stegförmig ausgebildet und vermeidet innenseitige, für Staunässe anfällige Bodenmulden. Insgesamt läßt sich der Boden ohne weiteres ausreichend hoch gegenüber einer jeweiligen Aufstellebene hochlegen, so daß auch etwaige Wasserlachen bei Aufstellebenen etwa im Erwerbsgartenbau keinen Kontakt zum Topfboden erhalten und insbesondere bei bodenseitigen Löchern nicht zu einer unkontrollierten Wasseraufnahme bzw. zur Behinderung des Wasserablaufs bei einer Schwallbewässerung führen. Dabei lassen sich die strukturellen Vorteile des tiefgezogenen Topfs hinsichtlich seiner Festigkeit bei extremer Dünnwandigkeit wie auch der Kostenvorteil von gegenüber dem Spritzgußverfahren günstigen Formwerkzeugen beibehalten.

Zwei Ausführungsbeispiele der Erfindung sind in der Zeichnung dargestellt und werden nachfolgend näher beschrieben. In der Zeichnung zeigen:
- Fig. 1: Ansicht eines Pflanztopfs von unten,
- Fig. 2: Schnitt nach Linie II-II in Fig. 1,
- Fig. 3 und 4: schnittbildliche Ansicht des Bodenbereichs zu einem Pflanztopf gemäß Fig. 1 und 2 im Verlauf der Formgebung,
- Fig. 5 und 6: schnittbildliche Ansichten einer Tiefziehvorrichutng bei verschiedenen Arbeitsphasen,
- Fig. 7: Ansicht einer zweiten Ausführungsform eines Pflanztopfs schräg von unten,
- Fig. 8: Ansicht des Pflanztopfs nach Fig. 7 von unten,
- Fig. 9: Schnitt nach Linie IX-IX in Fig. 8,
- Fig. 10 und 11: schnittbildliche Ansichten des Bodenbereichs zu einem Pflanztopf nach Fig. 7,8 und 9 im Verlauf der Formgebung.

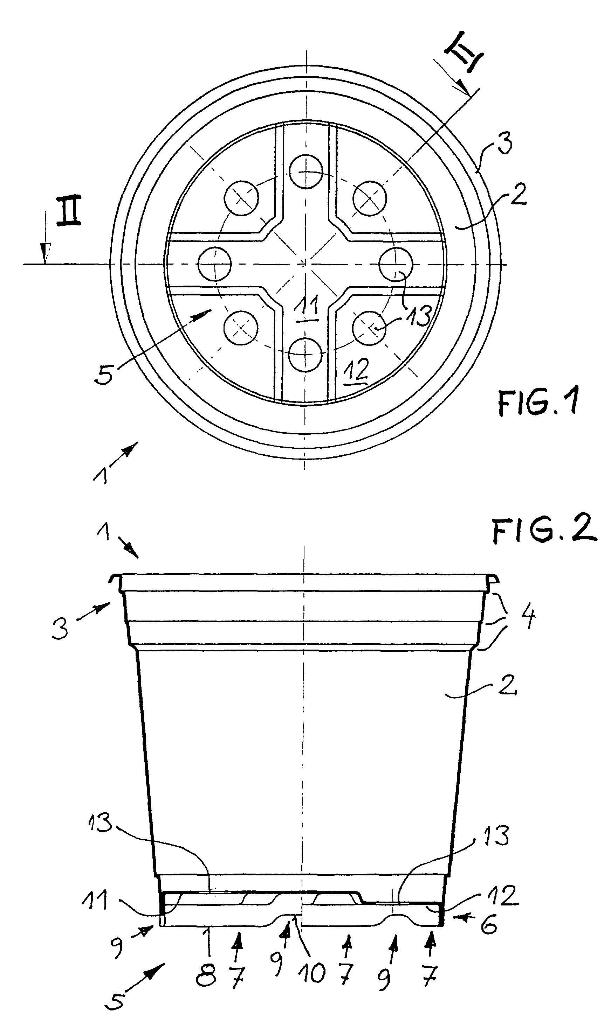

Der in Fig. 1 und 2 veranschaulichte Pflanztopf 1 hat eine stumpfkegelige Grundform mit einem Mantel 2, der sich nach oben hin zu einem Topfrand 3 hin aufweitet. Der Topfrand 3 ist ein bogenförmig nach unten rückgeformter Hohlrand, der zusammen mit umlaufenden Stufen 4 sowohl dem Aussehen wie auch der Querschnittsversteifung wie auch der guten Greifbarkeit dient.

Unterseitig weist der Topf einen Boden 5 auf, der über einen Rand 6 auf eine geeignete Fläche zu stellen ist.

Der Pflanztopf 1 ist aus einer Kunststoffolie tiefgezogen, bei der ein Rand 6 dieser Form nicht ohne weiteres - wie etwa bei einem Spritzgußteil - vorgegeben werden kann. Er ist vielmehr in der Weise ausgebildet, daß die Folie hier doppellagig mit einer äußeren, den Mantel 2 fortsetzenden Lage und einer inneren Lage besteht, die in den Boden 5 übergeht. Diese beiden Lagen des Randes 6 sind zweckmäßig fest aneinanderliegend geformt, so daß sich keine nennenswerten Zwischenräume (Ringspalte) ergeben, in denen sich Staunässe sammeln könnte oder in denen Erde oder Wurzelwerk sich verankern könnte, was beim Entleeren oder Umtopfen problematisch wäre.

Der Rand 6 besteht aus Randabschnitten 7, die mit einer Unterkante 8 eine Aufstellebene definieren und die voneinander durch Lücken 9 mit abgehobener Unterkante 10 begrenzt sind. Diese Lücken 9 unterbrechen eine sonst ringförmig geschlossene Aufstellinie, innerhalb der aus dem Topf ablaufendes Wasser gefangen würde, was die Feuchtigkeitsregulierung im Topf beeinträchtigen und eine Entwicklung von Staunässe fördern würde.

Wie aus Fig. 2 ersichtlich, ist der Boden 5 selbst profiliert ausgebildet, wobei ein aus Fig. 1 ersichtlicher angehobener Bereich 11 gegenüber einem umgebenden tieferliegenden Bereich 12 eine Kreuzform erhalten hat. Auch innerhalb der Kreuzform 11, insbesondere aber innerhalb der tieferliegenden Bereiche 12, sind Löcher 13 zur Wasserabfuhr enthalten. Wird also ein bepflanzter Topf mit einem Schlauch oder einer Brause überschüssig gewässert, dann läuft das Wasser durch die Löcher 13 nach unten ab und verläßt den Bereich des Topfes durch die Lükken 9. Dabei sorgt der ausreichend hohe Abstand zwischen der Aufstellebene gemäß Unterkanten 8 und dem Boden 5 dafür, daß auch Tropfen oder verbleibende flachere Wasseransammlungen nicht nach oben in den Topf hineinwirken können. Die Kreuzform 11 ist bei der Gestaltung des Bodens zum Rand 7 hin geführt und bildet dort am Rand 7 einen angehobenen Bodenbereich jeweils oberhalb einer Lücke 9. Dies ist formungstechnisch vorteilhaft, da sich somit zwischen dem Boden und dem Aufstellbereich, also im Bereich der inneren Lage des doppellagigen Stegs 6 relativ gleichmäßige Verformungen ergeben, die allesamt im Bereich von Zugverformungen liegen. Ein Hochziehen der Rand-Innenlage im Bereich der Lücken 9 kann stauchungsfrei auch durch eine (bereichsweise) nach oben überstehende Doppellage erfolgen, um z.B. einen flachen Boden zu erzielen. Ein profilierter Boden ist jedoch einfacher zu formen und besser zu nutzen.

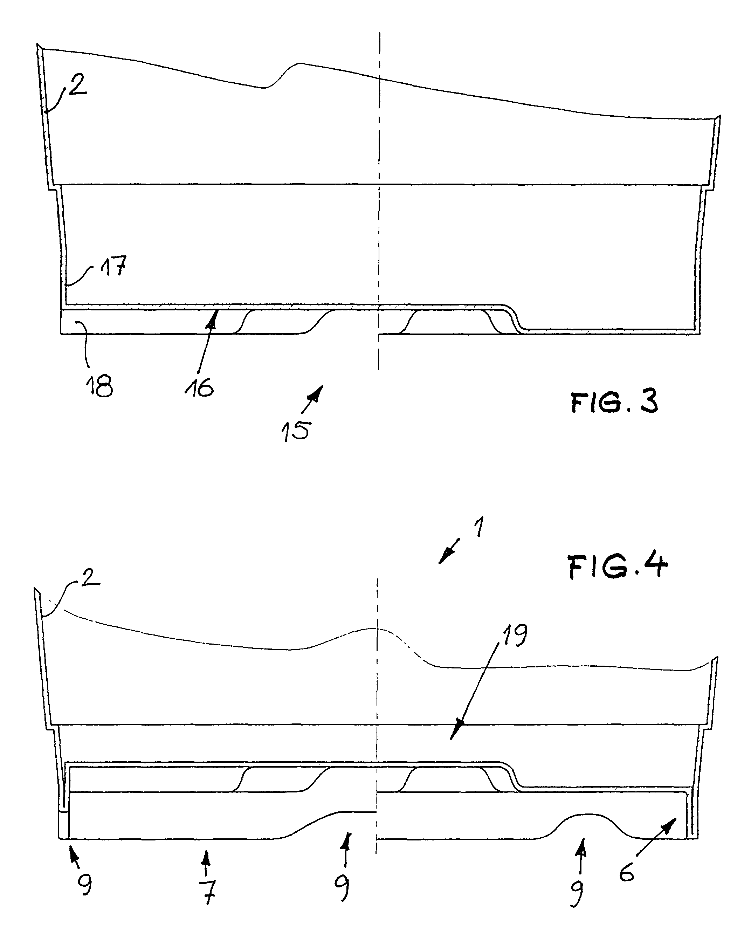

In den Fig. 3 und 4 sind die Formungsschritte des Topfes 1 im Bodenbereich anhand von Zwischenformen veranschaulicht. Dabei wird zunächst eine Zwischenform mit einem Boden 15 ausgebildet, die zwar im inneren Bereich bereits eine Profilierung 16 mit der Kreuzform 11 des späteren Topfes umfaßt, ansonsten nur nach oben hin offen ist, wie es der traditionellen Formgebung in Tiefziehverfahren entspricht. Der Boden 15 ragt dabei gegenüber dem Mantel 2 gemäß Fig. 2 deutlich weiter nach unten mit einem langen, unten strenger zylindrisch gebildeten Randbereich 17.

In einem zweiten Verformungsschritt wird der Boden nach oben hin eingestülpt, um die in Fig. 4 veranschaulichte Form eines Bodens 19 zu erhalten, die allerdings noch keine der erst später einzustanzenden Löcher aufweist. Beim Einstülpen entsteht der doppellagige Rand mit seinen zur Bildung der Füße gewünschten Unterkanten. Weiterhin entsteht dort, wo Einformungen 18 bereits in der Zwischenform gemäß Fig. 3 vorgesehen waren, nicht nur im Boden eine Kreuzrippenform sondern auch eine untere Randkontur mit den Lücken 9 für einen ungehinderten Wasserab- und -durchlauf. Die Innenlage des doppellagigen Randes 6 ist dabei sogar in der Breite (Höhe) relativ gleichbleibend, wenn man etwa den Bereich der Lücken 9 und den Bereich der Füße 7 vergleicht.

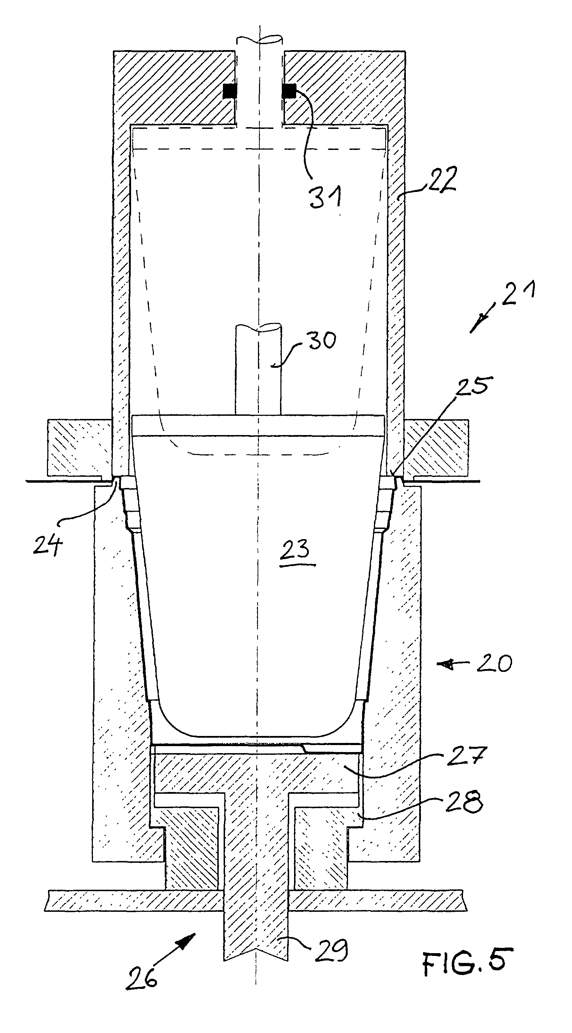

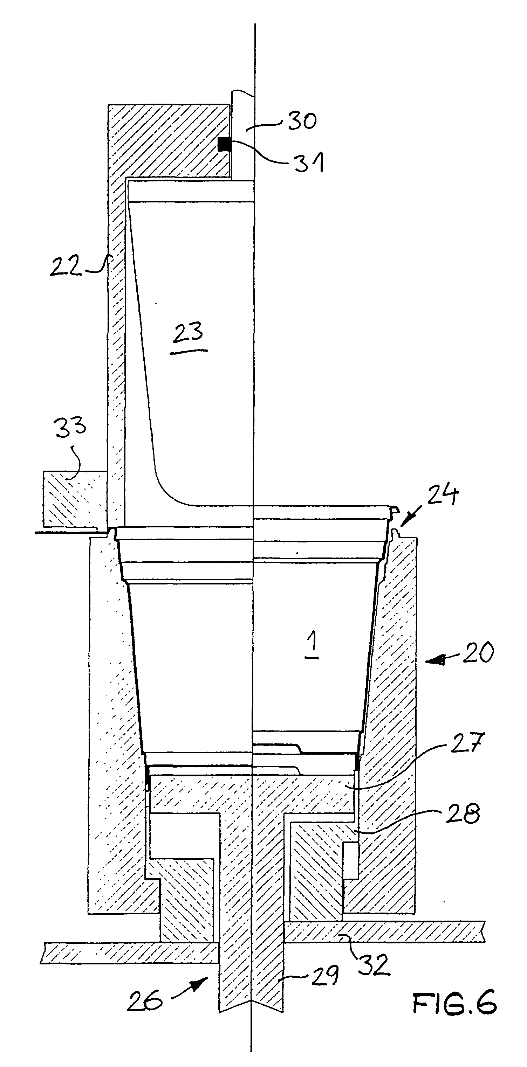

Eine Tiefziehform zur Herstellung eines Pflanztopfs nach Fig. 1 und 2 bzw. eines noch zu stanzenden Formrohlings mit einem Boden gemäß Fig. 3 und (nachfolgend) Fig. 4 ist in den Fig. 5 und 6 zu sehen. Eine zur (außenseitigen) Formung des Topfes gestaltete Negativform ist eine Mulde 20 in einer mit 21 bezeichneten Tiefziehform, die oberseitig durch einen glockenförmigen Deckel 22 druckfest abschließbar ist. Die Glockenform dient dazu, einen in die Mulde niederbeweglichen Vorform-Stempel 23 mit gerundeten Kanten in einer in gebrochenen Linien angedeuteten Rückzugslage aufzunehmen.

Wird nun eine auf Erweichungstemperatur vorerhitzte und mit Übermaß kreisförmig ausgestanzte Folie, etwa eine Polypropylenfolie, von 140°C bis 150°C an einem oberen Rand 24 der Mulde 20 von dem Deckel 22 festgeklemmt und der Stempel 23 niedergefahren, dann ergibt sich aufgrund der Form des Stempels eine vorgegebene Streckung der Folie mit entsprechender Wanddickenverteilung zu einer zunächst noch vereinfachten kleineren Topfform.

Eine weitergehende und verfeinerte Verformung erfolgt mittels innenseitig in die Mulde eingegebener Druckluft von beispielsweise 5 oder 6 bar, gegebenenfalls auch unterstützt durch das Aufbringen von Vakuum innerhalb der Mulde aber außerhalb der tiefgezogenen Folie, so daß die Mantelform bereits ihre endgültige Fassung gemäß Fig. 1 und 2, der Boden aber die Zwischenform gemäß Fig. 3 erhält. Bei dieser Formgebung dient eine umlaufende Unterkante 25 des Deckels 22 in Verbindung mit dem Rand 24 der Mulde 20 als Niederhalter, der beim Tiefziehen ein Nachrutschen von Folie verhindert und bei der nachfolgenden Weiterverformung den Formling fixiert.

Im weiteren wird eine zweigeteilte Bodenform 26 wirksam, die aus einer Innenform 27 und einem Außenring 28 besteht, dessen radiale Breite etwa gleich oder geringfügig breiter als die doppellagige Ausbildung der gewünschten Randabschnitte 7 ist. Die Innenform 27 ist stempelartig an einem Kolben 29 axial in die Mulde 20 hinein hochfahrbar und stülpt dabei die erzielte Zwischenform des Topfes vom Boden her ein, so daß der in Fig. 4 dargestellte Boden 19 entsteht. Die sich ergebende Stellung und Form ist in Fig. 6 links von der eingezeichneten Mittelachse veranschaulicht, wobei der Deckel 22 mit seiner Niederhalter-Unterkante 25 noch als Arretierung und Widerlager dient. Dort ist aber auch bereits schon wieder der Stempel 22 in die Ausgangsstellung zurückgefahren, und zwar mit Hilfe einer axialen Kolbenstange 30, die mit einer Bewegungsdichtung 31 gegenüber dem Deckel 22 abgedichtet ist, um die erwähnte pneumatische Ausformung zu ermöglichen.

Rechts der Mittelachse ist in Fig. 6 ein weiterer Verfahrensschritt gezeichnet, bei dem der Außenring 28 über eine Halterung 32 von unten angehoben wird und dabei als Auswerfer wirkt, nachdem oberseitig bereits der Deckel 22 fortbewegt wurde. Vor dem Auswerfen ist die überstehende Folie durch eine Schnittplatte 33, die den Deckel 22 umgibt, im Zusammenwirken mit dem zugleich als Schneidstempel mit scharfer Außenkante versehenen Auflagerand 24 abgetrennt worden. Bei diesem Stanzen wird die Mulde 20 mitsamt Deckel 22 angehoben, während die Schnittplatte 33 stehenbleibt. Der so geformte Pflanztopf kann dann maschinell gegriffen und entnommen und einer Lochstanze zugeführt werden, während die Mulde 22 erneut von einer vorerwärmten Folie abgedeckt wird.

Dieser Tiefziehvorgang vollzieht sich unbeschadet der verschiedenen Verformungsschritte mit einer sehr hohen Taktfrequenz, wobei in an sich bekannter Weise die Formmulde 20 gekühlt wird, um die von der Folie abgegebene Wärme abzuführen und das tiefgezogene Produkt möglichst schon unterhalb der Erweichungstempertur dem Stanzvorgang zuzuführen. Das dabei erzielte Ergebnis zeigt allerdings, daß auch bei Pflanztöpfen, die aus einer Folie tiefgezogen sind, komplexe, stegartige Gestaltungen mit modulierten Randkonturen erzielt werden können, die traditionell nur anderen Formgebungsverfahren, nämlich dem Spritzguß, zugewiesen werden.

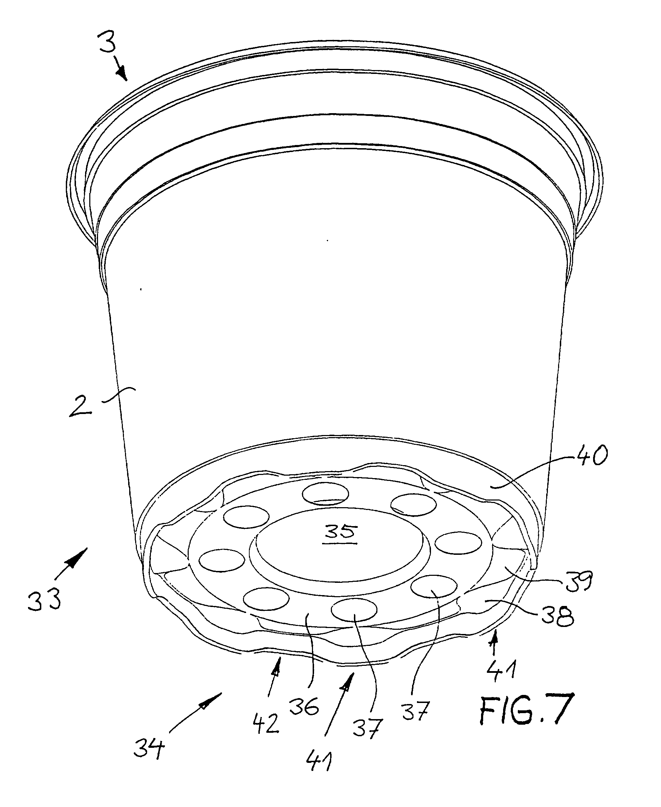

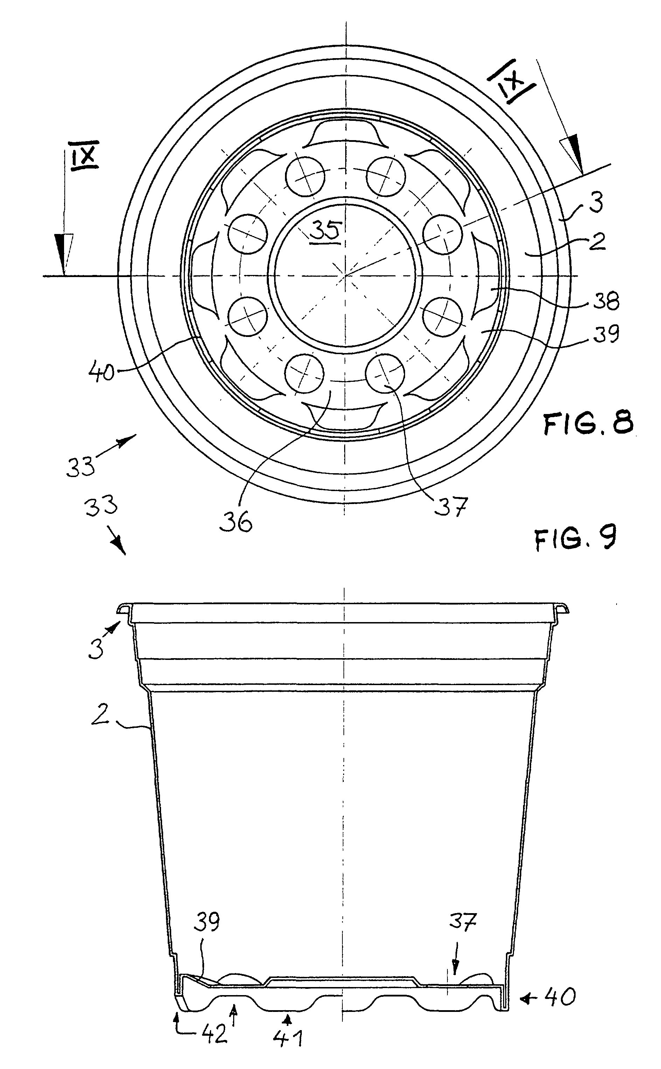

Der in den Fig. 7 und 8 schräg bzw. exakt von unten gezeigte, insgesamt mit 33 bezeichnete Pflanztopf unterscheidet sich in seinem Mantel 2 und in seinem Topfrand 2 nicht oder jedenfalls nicht wesentlich von dem Topf 1, wie oben beschrieben. Er weist aber einen insgesamt mit 34 bezeichneten Boden auf, der anders gestaltet ist. Dieser Boden 34 umfaßt einen zentralen, etwas höher liegenden kreisförmigen Bereich 35 , an den sich nach außen ein tieferliegender Ringbereich 36 mit acht Löchern 37 anschließt, wobei die Zahl der Löcher frei wählbar und nicht an die Zahl der sich zum Rand hin anschließenden Teilflächen 38 bzw. 39 gebunden ist, von denen hier aber tatsächlich auch wieder jeweils acht im Wechsel angeordnet sind. Die Teilflächen 39 steigen zum Rand hin schräg an (vgl. Fig. 9) während die dazwischen liegenden Teilflächen 38 jedenfalls in einem Mittenbereich horizontal und an dem Rand 36 anschließend ausgerichtet sind. Ein Ablauf von Wasser zu den Löchern 37 hin ist damit gegeben.

An diesen Boden schließt sich außen ein nach unten vorstehender Rand 40 als doppellagige Ausbildung der Folie an, der unterseitig eine gewellte Unterkante bildet mit tieferliegenden Bereichen als Füße 41 und mit höherliegenden Bereichen als Lücken 42.

Diese sind auch wieder mit der Bodengestaltung abgestimmt, so daß die randseitig hochgezogenen schrägen Teilflächen 39 oberhalb der Lücken 42 liegen und die Innenlage des Randes 40 auch in den zu den Lücken verschmählerten Bereichen des Randes beim Einstülpen eingezogen werden können.

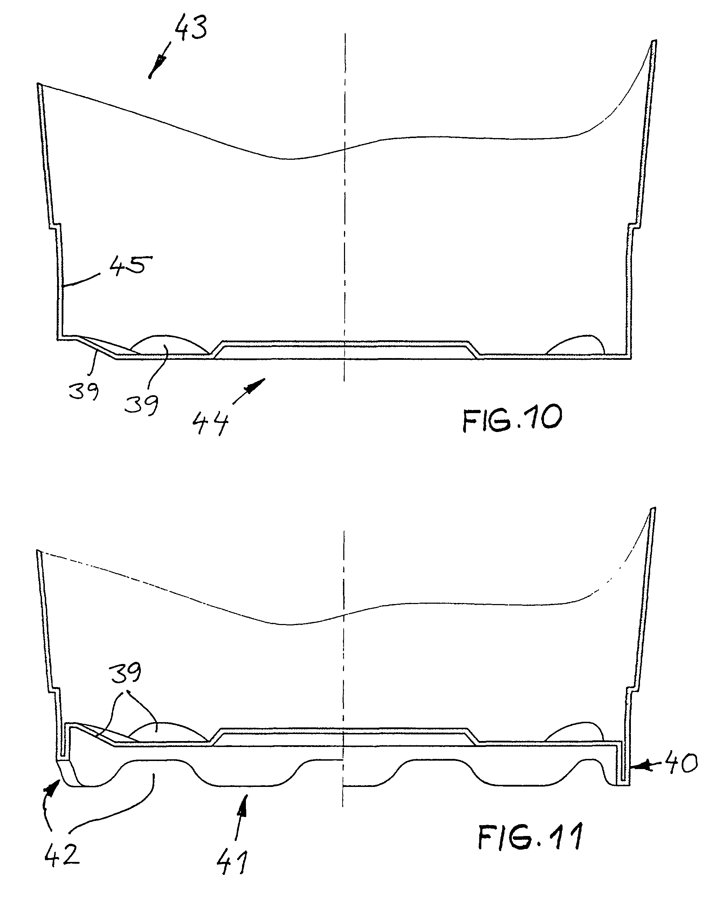

Aus Fig. 10 und 11 sind wieder die Zwischenschritte der Formgebung ersichtlich, wobei die zunächst nur nach unten hin becherförmig ausgebildete Zwischenform 43 einen Boden 44 aufweist, der bereits die schrägen Teilflächen 39 enthält. Ein weit nach unten gezogener einfacher Rand 45 wird dann beim Einstülpen des Bodens 44 zum doppellagigen Rand 40 gemäß Fig. 7 bis 9.

## Patentansprüche

1. Pflanztopf (1,33) aus tiefgezogener Kunststoffolie mit einem über Füße (7,41) gegenüber einer Aufstellfläche mit Abstand hochgelegten Boden (5,34), **dadurch gekennzeichnet, daß** die Füße (7,41) aus am Rand doppellagig nach unten ragenden Randabschnitten bestehen, zwischen denen jeweils eine Lücke (9,42) in der Aufstandlinie der Füße (7,41) mit einer von der Aufstellfläche abgehobenen Unterkante (10) ausgebildet sind, wobei der Boden (5,34) oberhalb der Lücke (9,42) zumindest randseitig hochgezogen ist.

2. Pflanztopf nach Anspruch 1, **dadurch gekennzeichnet, daß** die Randabschnitte aus zwei über einen eine Aufstandlinie bildenden Falz doppellagig ineinander übergehen.

3. Pflanztopf nach Anspruch 1 oder 2, **dadurch gekennzeichnet, daß** der Boden (5,34) profiliert ausgebildet ist und entsprechend der Profilierung oberhalb der Lücken (9,42) hochgezogen ist.

4. Pflanztopf nach Anspruch 3, **dadurch gekennzeichnet, daß** der Boden (5) in einer Kreuzform (11) profiliert ist, wobei die Kreuzbalken gegenüber dem übrigen Boden höhergelegt sind.

5. Pflanztopf nach Anspruch 3, **dadurch gekennzeichnet, daß** der Boden (34) randseitig in gesonderten Teilflächen (39) begrenzt hochgezogen ist.

6. Pflanztopf nach Anspruch 5, **dadurch gekennzeichnet, daß** die Teilflächen (39) schräg zum Rand (40) hin ansteigend ausgebildet sind.

## Claims

1. Plant pot (1, 33) moulded from a deep-drawn plastic sheet with a base (5, 34) elevated a certain distance from a mounting surface by feet (7, 41), **characterised in that** the feet (7, 41) consist of edge sections projecting downwards at the edge in two layers, wherein a gap (9, 42) is formed between each section in the perpendicular line of the feet (7, 41), with a lower edge (10) raised from the mounting surface, and wherein the base (5, 34) is raised at least on the edge side above the gap (9, 42).

2. Plant pot according to claim 1, **characterised in that** two of the edge sections pass into each other in a double layer by means of a fold forming a perpendicular line.

3. Plant pot according to daim 1 or 2, **characterised in that** the base (5, 34) has a profiled design and **in that** this profiling causes it to be raised above the gaps (9, 42).

4. Plant pot according to claim 3, **characterised in that** the base (5) is profited in the shape of a cross (11), wherein the cross beams are raised relative to the remainder of the base.

5. Plant according to claim 3, **characterised in that** the base (34) is raised to a limited extent on the edge side in separate partial areas (39).

6. Plant pot according to claim 5, **characterised in that** the partial areas (39) are formed so that they rise obliquely in the direction of the edge (40).

## Revendications

1. Pot de fleur (1, 33) formé par emboutissage d'une feuille de matière plastique avec un fond (5, 34) surélevé par des pieds (7, 41) à distance d'une surface de pose, **caractérisé en ce que** les pieds (7, 41) se composent de parties de bord prolongées vers le bas en couche double à partir du bord, entre lesquelles est chaque fois formée dans la ligne de pose des pieds (7, 41) une découpe (9, 42) avec une arête inférieure (10) surélevée par rapport à la surface de pose, le fond (5, 34) étant surélevé au-dessus des découpes (9, 42) au moins dans la région du bord.

2. Pot de fleur selon la revendication 1, **caractérisé en ce que** les parties de bord se fondent à deux l'une dans l'autre en couche double en un pli formant une ligne de pose.

3. Pot de fleur selon la revendication 1 ou 2, **caractérisé en ce que** le fond (5, 34) est profilé et est surélevé au-dessus des découpes (9, 42) selon le profilage.

4. Pot de fleur selon la revendication 3, **caractérisé en ce que** le fond (5) est profilé en forme de croix (11), les branches de la croix étant surélevées par rapport au reste du fond.

5. Pot de fleur selon la revendication 3, **caractérisé en ce que** le fond (34) est surélevé de façon limitée dans la région du bord dans des surfaces partielles séparées (39).

6. Pot de fleur selon la revendication 5, **caractérisé en ce que** les surfaces partielles (39) présentent une inclinaison ascendante en direction du bord (40).
